# EUROPÄISCHE PATENTSCHRIFT

(11) **EP 0 920 702 B1**
(45) Veröffentlichungstag und Bekanntmachung des Hinweises auf die Patenterteilung: **12.07.2000**
(21) Anmeldenummer: 97918889.3
(22) Anmeldetag: 18.08.1997
(51) Int. Cl.: H01F 41/12, H01F 41/02, H01F 1/153

(54) **BEWICKLUNGSSCHUTZ FÜR BANDKERNE**
WINDING PROTECTION FOR TAPE-WOUND CORES
PROTECTION D'ENROULEMENT POUR TORES ENROULES

(30) Priorität: 22.08.1996 DE 19633983
(43) Veröffentlichungstag der Anmeldung: 09.06.1999
(73) Patentinhaber: Vacuumschmelze GmbH, 63450 Hanau (DE)
(72) Erfinder: HUNDT, Harald, D-64807 Dieburg (DE)
(74) Vertreter: Zedlitz, Peter, Dipl.-Inf.
(86) Internationale Anmeldenummer: DE9701779
(87) Internationale Veröffentlichungsnummer: WO9808238

(56) Entgegenhaltungen:
- US-A- 3 246 627
- US-A- 3 342 754
- DATABASE WPI Section Ch, Week 9541 Derwent Publications Ltd., London, GB; Class A26, AN 95-314771 XP002048363 & JP 07 211 530 A (HITACHI METALS LTD) , 11.August 1995

## Beschreibung

Die Erfindung betrifft ein Verfahren zur Herstellung eines Bewicklungsschutzes für Bandkerne mit einem Polymer, insbesondere ein neues Verfestigungs- und Umhüllungsverfahren zur möglichst dünnwandigen Isolation und gleichzeitigen Verfestigung magnetischer Bandkerne.

Magnetkerne für elektrische Bauelemente werden in vielen Fällen als Bandkerne, insbesondere als Ringbandkerne, ausgeführt. Diese Ringbandkerne haben in der Regel eine zylindrischen Umfang und eine Innenöffnung in Achsrichtung. Derartige Ringbandkerne werden zur Herstellung von Induktivitäten und Übertragern mit einer oder mehreren Wicklungen bewickelt. Diese Wicklungen bestehen aus isolierten elektrischen Leitungen wie z.B. Kupferlackdraht. Hierbei muß die Wicklung gegen Beschädigungen beim Umwickeln durch die Kanten des Magnetkerns geschützt werden.

Insbesondere Ringbandkerne, die aus dünnen geschnittenen Bändern gewickelt sind, weisen sehr scharfe Kanten auf. Für Ringbandkerne, die aus amorphen oder nanokristallinen Legierungen bestehen, ist zusätzlich wegen der Sprödigkeit der Bänder gleichzeitig ein Kantenschutz auch für die inneren und äußeren Bandlagen vor den auftretenden Kräften beim Bewickeln notwendig. Zusätzlich muß der Kantenschutz elektrisch isolierend sein.

Eine weitere Forderung ist die Stabilisierung bzw. Verfestigung des Bandkerns, der bedingt durch seinen Aufbau ein sehr instabiles Gebilde darstellt. Dies betrifft weniger den Innen- oder Außendurchmesser des Ringbandkerns, da diese Maße z.B. durch Punktverschweißungen der inneren und äußeren Bänder untereinander gut fixiert sind. Kritisch ist hier vor allem die Kernhöhe, da sich abhängig von verschiedenen Parametern, wie z.B. Wickelzug, Bandgeometrie, Oberflächenbeschaffenheit der Bänder, Bandbreite usw. leicht eine Verschiebung in Achsrichtung ergibt. Um diese Änderung der Kerngeometrie zu verhindern, sind sehr unterschiedliche Maßnahmen bekannt.

Allgemein bekannt ist das Beträufeln und/oder Tränken der Kerne mit einem Polymer, welches sich z.B. durch Lösungsmittelabgabe oder Reaktion zweier Komponenten verfestigt. Nachteilig dabei ist aber, daß mit diesem Verfahren eine genaue Einstellung der Schichtdicke nicht möglich ist.

Aus der JP 7 211 530 A ist ferner ein mit einem Polymerschicht beschichteter Ringbandkern aus einer nanokristallinen Legierung bekannt.

Die US 3,342,754 offenbart weiterhin Einzelheiten eines Beschichtungsverfahrens, durch das eine Polymerschicht auf einer Oberfläche aufbringbar ist.

Für den "äußeren" Schutz von Ringkernen sind mehrere Verfahren bekannt. Aus der EP 0 677 856 A1 und aus der EP 0 226 793 A1 sind Kunststoffgehäuse bekannt, die der äußeren Form des Kerns angepaßt sind, wobei durch den eigenstabilen Aufbau auf eine innere Verfestigung verzichtet werden kann. Aus der DE-GM 77 26 882 sind verschiedene Umhüllungen für ringförmige Kerne von Spulen bekannt, die im wesentlichen verhindern sollen, daß der Lack des auf den Kern aufzubringenden Drahtes durch scharfe Kanten des Kerns beschädigt wird. Dieses Bandagieren mit Isolierfolien ist aber arbeitsaufwendig, da beispielsweise bei einem Ringkern die Folie immer durch die Mitte des Kerns beim Bandagieren hindurchgezogen werden muß.

Ferner ist aus der EP 0 621 612 A1 die Verwendung eines in Achsrichtung des Kerns aufgeschrumpften Schrumpfschlauches bekannt, die zu einer dünnwandigen Fixierung und einem Schutz der Innen- und Außenkanten bei gleichzeitiger Stabilisierung des Kerns führt.

Ferner ist aus der EP 0 351 861 A1 das Umspritzen eines Ringbandkerns mit Kunststoff in einem Werkzeug bekannt. Damit sind neben dem Kantenschutz und der Kernverfestigung auch gleichzeitig noch Montage- und Isolierteile herstellbar.

Allen bekannten Verfahren ist aber der Nachteil inhärent, daß sie zum einen sehr arbeitsaufwendig und deshalb für die Massenproduktion nicht geeignet sind, sind und zum anderen mit ihnen eine genaue und insbesondere sehr dünne gleichbleibende Schicht nicht einstellbar ist. Speziell bei kleinen Kernen haben die herkömmlichen Verfahren den Nachteil, daß durch die notwendigen Wandstärken der Umhüllung und die notwendigen Fügetoleranzen beim Einsetzen des Kerns das Verhältnis zwischen dem äußeren Volumen (Bruttovolumen) und dem magnetisch genutzten Volumen (Nettovolumen) ungünstig wird. Der magnetische Nutzungsfaktor (Bruttovolumen/Nettovolumen) verringert sich dabei zunehmend und entfernt sich erheblich von dem theoretischen Idealwert 1.

Die bekannten Verfahren, bei denen mit einem Polymer gearbeitet wird (Tränken, Beträufeln, Wirbelsintern usw.), führen zu erheblichen Veränderungen der magnetischen Eigenschaften. Dies resultiert aus der Volumenänderung der Polymere während oder nach dem Polymerisationsschritt. Die auftretenden Schrumpfkräfte sowie Druck- und Zugspannungen bewirken wegen der Magnetostriktion der weichmagnetischen Bänder eine Änderung der Bandkerneigenschaften.

Aufgabe der vorliegenden Erfindung ist es daher, ein für die Massenproduktion geeignetes Herstellverfahren für einen Bewicklungsschutz für Magnetkerne mit einem Polymer anzugeben, bei dem es nicht zu erheblichen Veränderungen der magnetischen Eigenschaften kommt und das rationell zu einer sehr dünnwandigen Isolation unter gleichzeitiger Verfestigung magnetischer Bandkerne führt.

Erfindungsgemäß wird diese Aufgabe mit einem Verfahren nach Anspruch 1 gelöst, welches dadurch gekennzeichnet ist, daß auf den Bandkern im Trommelverfahren aus der Gasphase ein Polymerfilm abgeschieden wird.

Typischerweise wird der Polymerfilm dadurch hergestellt, daß zuerst unter Unterdruck, d.h. in der Regel unter Vakuum, Monomere auf die Oberflächen des Magnetkerns kondensiert werden und polymerisieren. Zum Erzeugen der Monomere werden Oligomere verdampft und anschließend optisch und/oder thermisch und/oder über ein Plasma zersetzt.

Die besonderen Vorteile des im Trommelverfahren abgeschiedenen Polymerfilms sind einerseits hermetisch dichte Schichten schon ab einigen µm Dicke. Ferner zeichnen sich die Polymerfilme durch hohe Flexibilität und Dehnung und damit geringe Rißanfälligkeit aus. Die Monomere können insbesondere bei Bandkernen in feinste Hohlräume eindringen, da sie in der gasförmigen Zwischenstufe vorliegen. Effekte durch Oberflächenkräfte wie z.B. bei Lacken treten nicht auf, das heißt, es tritt keine Kantenentnetzung bzw. Brückenbildung auf. Ferner haften aus der Gasphase abgeschiedene Polymerfilme auch sehr gut auf glattem Untergrund.

Das Trommelverfahren eignet sich auch insofern für die Massenproduktion, als dadurch eine große Anzahl von Ringbandkernen auf preiswerte Weise beschichtet werden kann.

In einer Weiterbildung der vorliegenden Erfindung wird als Polymerfilm ein Poly-Parylene-Film abgeschieden. Typischerweise sind diese Poly-Parylene-Film Poly-Para-Xylylene-Filme. Parylene ist der allgemeine Oberbegriff für eine Familie organischer Polymere, die sich auf Oberflächen ausbilden, welche bei Unterdruck mit dem verdünnten aktiven Gas behandelt werden. Dabei entstehen lineare, kristalline Polymere, die herausragende physikalische Eigenschaften bezogen auf die Schichtstärke aufweisen und äußerst innert gegen Chemikalien und porenfrei sind.

Das vorliegende Verfahren eignet sich insbesondere zur Beschichtung von Bandkernen, die aus Bändern amorpher oder kristalliner oder nanokristalliner Legierungen bestehen.

Typischerweise weisen dabei die Bandkerne einen Füllfaktor zwischen 70% und 90% auf. Unter Füllfaktor versteht man das Verhältnis des magnetischen Kernquerschnitts zum geometrischen Kernquerschnitt.

Vorteilhafte Weiterbildungen sind in den Unteransprüchen 2 bis 9 beschrieben.

Die Erfindung ist in der Zeichnung beispielsweise veranschaulicht und nachstehend im einzelnen anhand der Zeichnung beschrieben. Es zeigen:

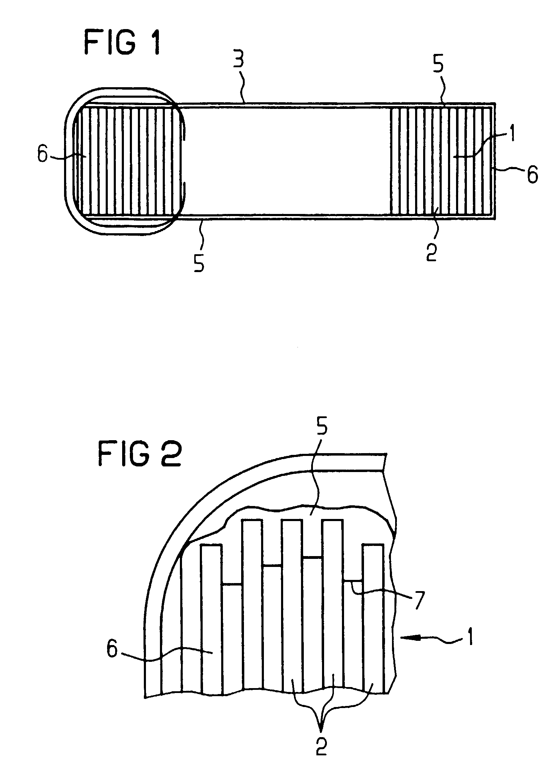

- Figur 1: die schematische Darstellung einen Schnitt durch einen Ringbandkern mit Parylene-Fixierung und einer Drahtwicklung und
- Figur 2: einen vergrößerten Ausschnitt aus Figur 1.

Nach der Zeichnung besteht der Ringbandkern 1 aus einem ringförmigen Bandkern, der aus Bändern 2 amorpher oder nanokristalliner Legierung besteht. Auf den Außenflächen 5 und 6 ist der Ringbandkern mit einer Poly-Para-Xylylene-Beschichtung 3 versehen.

Diese Poly-Para-Xylylene-Beschichtung 3 wird auf den Ringbandkern 1 aus der Gasphase abgeschieden.

Dabei beginnt der Beschichtungsprozeß mit dem Erhitzen von pulverförmigen Di-Para-Xylylene-Dimeren, wodurch diese direkt in den gasförmigen Zustand übergehen, das heißt sublimieren. Als Prozeßparameter haben sich dabei eine Temperatur von ca. 150°C und ein Druck von ca. 133 Pa (ca. 1 Torr) als besonders geeignet erwiesen.

Danach werden die gasförmigen Di-Para-Xylylene-Dimere bei einer Temperatur von ca. 690°C und einem Druck von ca. 67 Pa (ca. 0,5 Torr) zu einer einer Para-Xylylene-Monomeren thermisch zersetzt (Pyrolyse).

Diese gasförmigen Para-Xylylene-Monomere werden dann in eine Prozeßkammer (nicht gezeigt), in der Regel eine Vakuumkammer, geleitet und verteilen sich dort gleichmäßig und kondensieren auf die Oberflächen 5 und 6 des Ringbandkerns 1 sowie die Hohlräume 7 zwischen den Bandlagen 2 des Ringbandkerns 1. Danach erfolgt eine Polymerisation und eine Polymerfilmbildung.

Die Dicke des Polymerfilms kann dabei durch die Zufuhr von Para-Xylylene-Monomeren gezielt eingestellt werden. Bei Ringbandkernen hat sich eine Polymerfilmschichtdicke zwischen 5 und 60µm als besonders geeignet erwiesen.

Da der so entstehende Poly-Para-Xylylene-Film einen Schmelzpunkt von >275°C aufweist, entsteht ein temperaturstabiler Bewicklungsschutz, so daß der so beschichtete Ringbandkern mit als Bestandteil eines induktiven Bauelements einen Lötprozeß entsprechenden Anforderungen an oberflächenmontierte Bauelemente (SMD) ohne Aufschmelzen bzw. Schädigung des Bauelements übersteht.

Insbesondere können so Ringbandkerne mit einem Außendurchmesser zwischen 2 und 15mm mit einem Bewicklungsschutz versehen werden, welcher im kostengünstigen Trommelverfahren aufgebracht wird.

Weiterhin sind derartig beschichtete Ringbandkerne für die Herstellung von Übertragern und Transformatoren geeignet, bei denen durch Anwesenheit von hohen Spannungen eine Teilentladungsfreiheit gefordert ist.

Die in der Erfindung beschriebenen Polymere sind unter der eingetragenen Marke GALXYL® von der Firma Technipol, Italien sowie unter dem Handelsnamen Parylene von der Firma Novatran, Großbritannien und alphametals Lötsysteme GmbH/ Deutschland im Handel erhältlich.

## Patentansprüche

1. Verfahren zur Herstellung eines Bewicklungsschutzes für Bandkerne mit einem Polymer,
**dadurch gekennzeichnet,**
daß auf den Bandkern im Trommelverfahren aus der Gasphase ein Polymerfilm abgeschieden wird.

2. Verfahren nach Anspruch 1,
**dadurch gekennzeichnet,**
daß unter Unterdruck Monomere auf die Oberflächen des Magnetkerns kondensiert werden und dort polymerisieren.

3. Verfahren nach Anspruch 2,
**dadurch gekennzeichnet,**
daß zur Erzeugung der Monomere Oligomere verdampft und anschließend optisch und/oder thermisch und/oder über ein Plasma zersetzt werden.

4. Verfahren nach einem der Ansprüche 1 bis 3,
**dadurch gekennzeichnet,**
daß als Polymerfilm ein Poly-Parylene-Film abgeschieden wird.

5. Verfahren nach Anspruch 4,
**dadurch gekennzeichnet,**
daß als Poly-Parylene-Film ein Poly-Para-Xylylene-Film abgeschieden wird.

6. Verfahren nach Anspruch 5,
**dadurch gekennzeichnet,**
daß bei einer Temperatur von ca. 150°C und einem Druck von ca. 133 Pa (ca. 1 Torr) Di-Para-Xylylene-Dimere verdampft werden und danach bei einer Temperatur von ca. 690°C und einem Druck von ca. 67 Pa (ca. 0,5 Torr) zu Para-Xylylene-Monomeren thermisch zersetzt werden und anschließend die Para-Xylylene-Monomere bei Raumtemperatur und einem Druck von ca. 13 Pa (ca. 0,1 Torr) auf den Magnetkern kondensiert werden und dort polymerisieren.

7. Verfahren nach einem der Ansprüche 2 bis 6,
**dadurch gekennzeichnet,**
daß durch die Zufuhr von Monomeren die Polymerfilmdicke eingestellt wird.

8. Verfahren nach einem der Ansprüche 1 bis 7,
**dadurch gekennzeichnet,**
daß Bandkerne vorgesehen sind, die aus Bändern amorpher oder nanokristalliner Legierungen bestehen.

9. Verfahren nach Anspruch 8,
**dadurch gekennzeichnet,**
daß die Bandkerne einen Füllfaktor zwischen 70% und 90% aufweisen.

## Claims

1. Method of producing a winding protection for tape-wound cores with a polymer, characterized in that a polymer film is deposited from the gas phase onto the tape-wound core by the drum method.

2. Method according to Claim 1, characterized in that monomers are condensed under negative pressure onto the surfaces of the magnetic core and polymerize there.

3. Method according to Claim 2, characterized in that, for producing the monomers, oligomers are vaporized and subsequently decomposed optically and/or thermally and/or via a plasma.

4. Method according to one of Claims 1 to 3, characterized in that a poly-parylene film is deposited as the polymer film.

5. Method according to Claim 4, characterized in that a poly-para-xylylene film is deposited as the poly-parylene film.

6. Method according to Claim 5, characterized in that di-para-xylylene dimers are vaporized at a temperature of approximately 150°C and a pressure of approximately 133 Pa (approximately 1 torr) and thereafter are thermally decomposed at a temperature of approximately 690°C and a pressure of approximately 67 Pa (approximately 0.5 torr) to form para-xylylene monomers and, subsequently, the para-xylylene monomers are condensed at room temperature and a pressure of approximately 13 Pa (approximately 0.1 torr) onto the magnetic core and polymerize there.

7. Method according to one of Claims 2 to 6, characterized in that the polymer film thickness is set by the supply of monomers.

8. Method according to one of Claims 1 to 7, characterized in that tape-wound cores comprising tapes of amorphous or nanocrystalline alloys are provided.

9. Method according to Claim 8, characterized in that the tape-wound cores have a filling factor of between 70% and 90%.

## Revendications

1. Procédé de fabrication d'une protection d'enroulement pour tores enroulés avec un polymère, caractérisé en ce qu'un film en polymère est déposé en phase gazeuse sur le tore enroulé dans un procédé au tonneau.

2. Procédé selon la revendication 1, caractérisé en ce que des monomères sont condensés sous vide partiel sur les surfaces du noyau magnétique où ils sont polymérisés.

3. Procédé selon la revendication 2, caractérisé en ce que, pour produire les monomères, on fait évaporer des oligomères qui sont décomposés ensuite par voie optique et/ou thermique et/ou par le biais d'un plasma.

4. Procédé selon l'une des revendications 1 à 3, caractérisé en ce que l'on dépose, en tant que film en polymère, un film de polyparylène.

5. Procédé selon la revendication 4, caractérisé en ce que l'on dépose, en tant que film de polyparylène, un film de polyparaxylylène.

6. Procédé selon la revendication 5, caractérisé en ce que l'on fait évaporer des dimères de di-paraxylylène à une température d'environ 150°C et sous une pression d'environ 133 Pa (environ 1 torr), qui subissent ensuite une décomposition thermique à une température d'environ 690°C et sous une pression d'environ 67 Pa (environ 0,5 torr) pour obtenir des monomères de paraxylylène, et que les monomères de paraxylylène sont ensuite condensés, à la température ambiante et sous une pression d'environ 13 Pa (environ 0,1 torr), sur le noyau magnétique où ils polymérisent.

7. Procédé selon l'une des revendications 2 à 6, caractérisé en ce que l'épaisseur du film en polymère est réglée par l'apport de monomères.

8. Procédé selon l'une des revendications 1 à 7, caractérisé en ce que l'on prévoit des tores enroulés qui sont constitués par des bandes formées d'alliages amorphes ou nanocristallins.

9. Procédé selon la revendication 8, caractérisé en ce que les tores enroulés présentent un coefficient de remplissage compris entre 70% et 90%.
